# EUROPEAN PATENT SPECIFICATION

(11) **EP 0 622 571 B1**
(45) Date of publication and mention of the grant of the patent: **06.08.1997**
(21) Application number: 94200575.2
(22) Date of filing: 07.03.1994
(51) Int. Cl.: F16H 61/02

(54) **Hydraulic control circuit for a transmission**
Hydraulischer Steuerkreis für ein Getriebe
Système de commande hydraulique pour une transmission

(30) Priority: 27.03.1993 GB 9306413
(43) Date of publication of application: 02.11.1994
(73) Proprietor: Delphi France Automotive Systems, 92257 La Garenne-Colombes (FR)
(72) Inventor: Bromhorst, Albert, F-67310 Romanswiller (FR)
(74) Representative: Denton, Michael John

(56) References cited:
- DE-A- 3 036 332
- DE-B- 1 120 900
- US-A- 3 120 763
- US-A- 4 558 612
- US-A- 4 984 484

## Description

This invention relates to a hydraulic control circuit for a hydraulically operated transmission of a vehicle and, in particular, to a hydraulic control circuit for a transmission which operates automatically in normal operation, but which can be operated manually.

It is common practice in automatic transmissions for motor vehicles to provide a number of friction operated devices (such as clutches or band brakes) which are operated to interconnect gears within the transmission. The friction devices are operated in a predetermined pattern dependent on the required drive ratio from the transmission. In these known arrangements, hydraulic fluid is used to control the operation of the friction devices. Flow of fluid to the friction devices is controlled by a number of shift valves. Each shift valve controls a ratio shift (first to second, third to second, etc.) in the transmission. Because of the number of shift valves required, the layout of the required fluid lines within the hydraulic control circuit becomes complicated. An example of such a hydraulic control circuit in accordance with the preamble of claim 1 is disclosed in US-A-4984484. DE-C-1120900 discloses a hydraulic control circuit having a shift valve and a manual valve.

It is an object of the present invention to overcome the above mentioned disadvantage.

To this end, a hydraulic control circuit in accordance with the present invention is characterised over US-A-4984484 by the features specified in the characterising portion of claim 1.

Preferably, the fluid path selection means comprises a ball valve having two fluid inlets and one fluid outlet, the fluid outlet being fluidly connectable to said one friction device, and a ball movable between the two fluid inlets and capable of closing one or the other of the fluid inlets.

The hydraulic control circuit preferably further comprises a pressure control valve associated with each friction device, each pressure control valve comprising a spool reciprocally movable in a bore to modulate the fluid pressure applied to its associated friction device.

Preferably, the hydraulic control circuit further comprises at least two pressure application valves fluidly connected with the ports in the shift valve and with each other, each pressure application valve comprising a spool reciprocally movable in a bore to allow or prevent pressurised fluid passing therethrough.

The control means preferably comprises at least two separate fluid lines between the manual valve and the shift valve, pressurised fluid being directed from the manual valve to one end of the spool in the shift valve to provide the reciprocal movement of the spool in the shift valve, the spool in the shift valve being biased by a spring against the action of the pressurised fluid. In this case, the control means preferably further comprises a solenoid operated valve positioned in each separate fluid line, and a control module for controlling the opening and closing of the solenoid operated valve, each solenoid valve being normally closed, but being openable to connect its associated fluid line to exhaust.

In comparison to the prior arrangements, the present invention only requires the use of a single shift valve. This considerably reduces the complexity of the fluid lines, the number of valves required, and the cost of the system. The present invention controls the pressure of the hydraulic fluid as opposed to the flow of hydraulic fluid and is not affected by changes in fluid viscoity or temperature. From the various embodiments described below, it will be appreciated that the present invention may provide a transmission which is capable of operating automatically or manually; which automatically compensates for wear of the friction elements in a friction device; which provides a smoother engagement of the friction devices; which allows manual control during a breakdown in the control module; and which provides engine braking in all gear ratios during downshifting. The present invention has also been found to provide improved fuel economy, and the transmission can be used in conjunction with a torque converter clutch or an open clutch. Other advantages are discussed below.

The present invention has application with a transmission having three or more forward ratios and one reverse ratio.

The present invention will now be described, by way of example, with reference to the accompanying drawings, in which:-
Figure 1 is a schematic view of a hydraulic control circuit in accordance with a first embodiment of the present invention for a hydraulically operated transmission, with the hydraulic control circuit set for placing the transmission in Park (P) mode;
Figure 2 is a similar view to Figure 1 with the hydraulic control circuit set for placing the transmission in Reverse (R) mode;
Figure 3 is a similar view to Figure 1 with the hydraulic control circuit set for placing the transmission in Neutral (N) mode;
Figure 4 is a similar view to Figure 1 with the hydraulic control circuit set for placing the transmission in first gear of Drive (D) mode;
Figure 5 is a similar view to Figure 1 with the hydraulic control circuit set for placing the transmission in second gear of Drive (D) mode;
Figure 6 is a similar view to Figure 1 with the hydraulic control circuit set for placing the transmission in third gear of Drive (D) mode;
Figure 7 is a similar view to Figure 1 with the hydraulic control circuit set for placing the transmission in fourth gear of Drive (D) mode;
Figure 8 is a similar view to Figure 1 with the hydraulic control circuit set for placing the transmission in first gear of manual mode;
Figure 9 is a similar view to Figure 1 with the hydraulic control circuit set for placing the transmission in second gear of manual mode;
Figure 10 is a similar view to Figure 1 with the hydraulic control circuit set for placing the transmission in third gear of manual mode;
Figure 11 is a cross-sectional view of one of the pressure application valves shown in Figure 1;
Figure 12 is a cross-sectional view of one of the pressure control valves shown in Figure 1;
Figure 13 is a graph of fluid pressure against time during actuation of a friction device by the present invention;
Figure 14 is a table of drive ratio against friction device engagement for the arrangement shown in Figures 1 to 10;
Figure 15 is a circuit diagram for a control module for use with the arrangement shown in Figures 1 to 10;
Figure 16 is a schematic view of a hydraulic control circuit in accordance with a second embodiment of the present invention for a hydraulically operated transmission, with the hydraulic control circuit set for placing the transmission in Park (P) mode;
Figure 17 is a view similar to Figure 16 with the hydraulic control circuit set for placing the transmission in second gear of Drive (D) mode;
Figure 18 is a view similar to Figure 16 with the hydraulic control circuit set for placing the transmission in second gear of manual mode;
Figure 19 is a table of drive ratio against friction device engagement for the arrangement shown in Figures 16 to 18;
Figure 20 is a schematic view of a hydraulic control circuit in accordance with a third embodiment of the present invention for a hydraulically operated transmission, with the hydraulic control circuit set for placing the transmission in second gear of Drive (D) mode;
Figure 21 is a schematic view of a hydraulic control circuit in accordance with a fourth embodiment of the present invention for a hydraulically operated transmission, with the hydraulic control circuit set for placing the transmission in first gear of Drive (D) mode;
Figure 22 is a view similar to Figure 21 with the hydraulic control circuit set for placing the transmission in second gear of Drive (D) mode;
Figure 23 is a view similar to Figure 21 with the hydraulic control circuit set for placing the transmission in third gear of Drive (D) mode; and
Figure 24 is a table of drive ratio against friction device engagement for the arrangement shown in Figures 21 to 23.

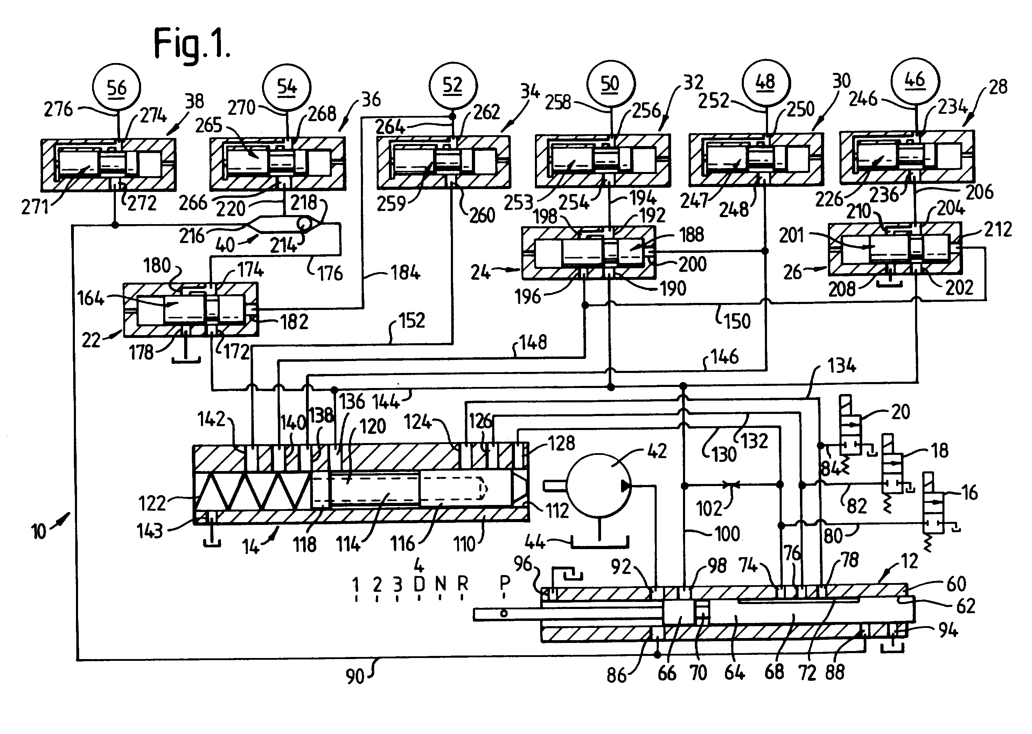

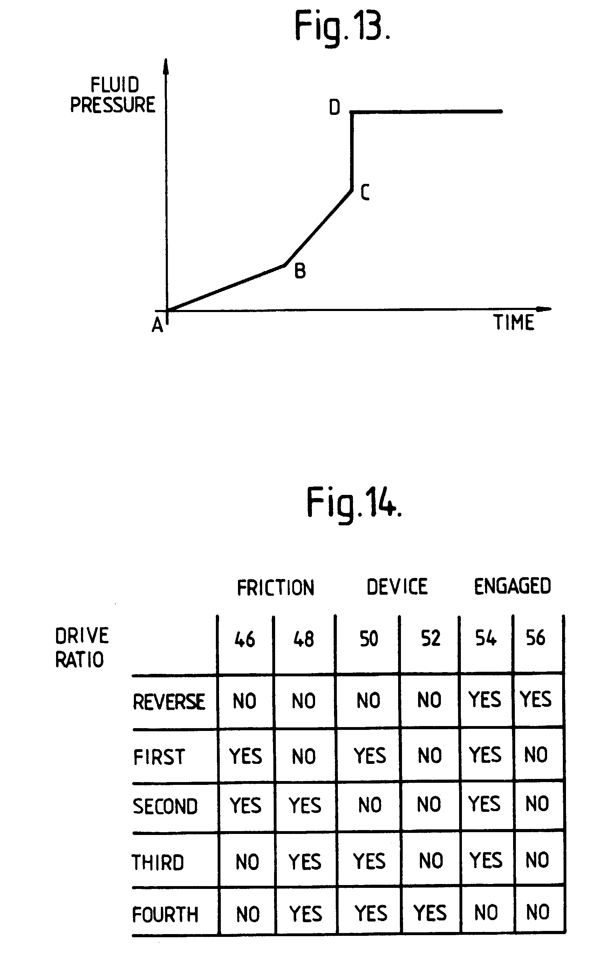

Referring to Figures 1 to 10, a hydraulic control circuit 10 in accordance with a first embodiment of the present invention is shown. The hydraulic control circuit 10 is for use in a hydraulically operated transmission of a vehicle in which the transmission has four forward gear ratios and one reverse gear ratio. The hydraulic control circuit 10 comprises a manual valve 12; a shift valve 14; three solenoid operated valves (solenoid valves) 16,18,20; three pressure application valves 22,24,26; six pressure control valves 28,30,32,34,36,38; a ball valve 40; and a pump 42. The pump 42 provides a source of pressurised hydraulic fluid for the hydraulic control circuit 10 and is connected to a fluid reservoir 44, and may also be connected to a pressure relief valve (not shown). The pressure control valves 28,30,32,34,36,38 of the hydraulic control circuit 10 are fluidly connected to friction devices 46,48,50,52,54,56 respectively, (which are usually in the form of clutches or band brakes) within the transmission for controlling the intermeshing of various gears within the transmission. A predetermined pattern (Figure 14) of engagement and disengagement of the friction devices determines the required drive ratio for the transmission. The arrangement of friction devices and gears (including planetary gear sets) within the transmission can be any suitable arrangement known to those skilled in the art to provide the required drive ratios, and will not be described herein in detail.

The manual valve 12 comprises a housing 60 having a longitudinally extending bore 62 therein. A spool 64 is slidably positioned in the bore 62. The spool 64 comprises a pair of spaced lands 66,68 separated by a portion of reduced diameter 70. One of the lands 68 includes a longitudinally extending groove 72 in its outer surface. The housing 60 includes three ports 74,76,78 for connecting the solenoid valves 16,18,20 respectively to the bore 62 by way of fluid lines 80,82,84 respectively. The housing 60 also includes a pair of ports 86,88 for connecting the pressure control valve 36 and one end 216 of the ball valve 40 to the bore 62 by way of fluid line 90; a port 92 for connecting the bore to the pump 40; a pair of ports 94,96 at the longitudinal extremities of the bore for connecting the bore to exhaust; and a further port 98 which is connected by way of fluid line 100 and restrictor 102 to the port 74 and the solenoid valve 16. The axes of the ports 86 and 92 lie in the same radially extending plane. The position of the spool 64 relative to the bore 62 is controlled manually by the vehicle operator by movement of a shift lever, not shown (as is well known to those skilled in the art), to provide fluid connection between the various ports in the manual valve 12 as will be described in more detail below.

The shift valve 14 comprises a housing 110 having a longitudinally extending bore 112 therein. A spool 114 is slidably positioned in the bore 112. The spool 114 comprises a pair of spaced lands 116,118 separated by a portion of reduced diameter 120 which defines a fluid path. The housing 110 includes three ports 124,126,128 adjacent one end thereof for connecting the solenoid valves 16,18,20 respectively to the bore 112, and for connecting the ports 74,76,78 respectively of the manual valve 12 to the bore 112 of the shift valve 14, by way of fluid lines 130,132,134 respectively. The spool 114 is biased by a spring 122 towards the said one end of the bore 112 containing the ports 124,126,128. The housing 110 further includes four ports 136,138,140,142 axially spaced from the ports 124,126,128. Port 136 is connected by fluid line 144 to the pressure application valves 22,24,26, and by fluid line 100 to the port 98 in the manual valve 12. Port 138 is connected by fluid line 146 to the pressure control valve 30. Port 140 is connected by fluid lines 148 and 150 to the pressure application valves 24,26 respectively. Port 142 is connected by fluid line 152 to the pressure control valve 34. A port 143 is positioned at the opposite end of the bore 112 to the ports 124,126,128 and is connected to exhaust. The position of the spool 114 relative to the housing 110 provides fluid connection between the various ports in the shift valve 14 as will be described in more detail below. In the rest position shown in Figure 1, ports 138, 140 and 142 are connected to exhaust by way of port 143.

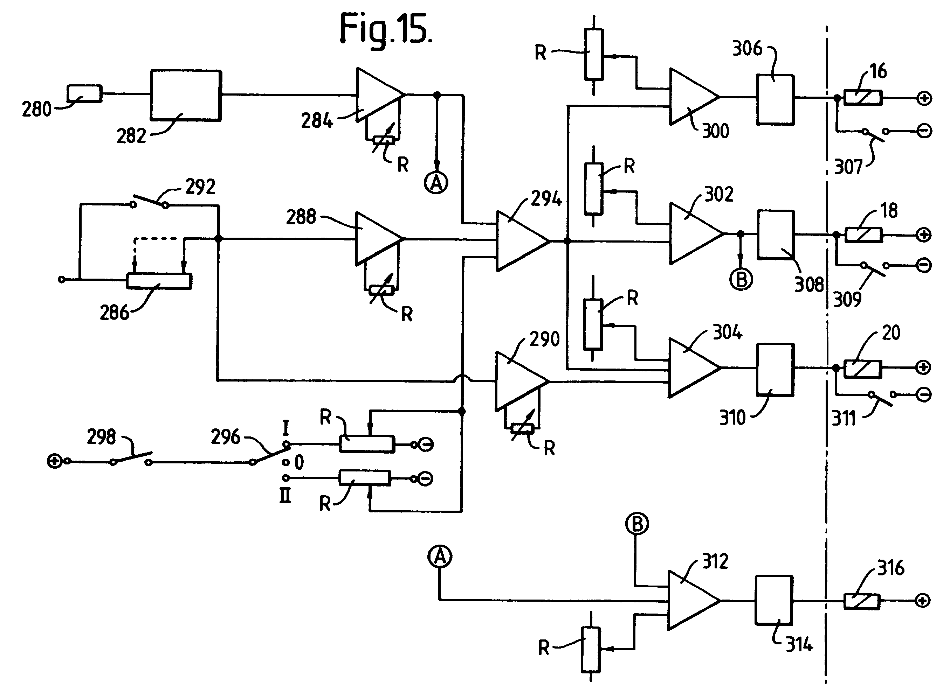

The solenoid valves 16,18,20 are actuable to connect the ports 74,76,78 respectively in the manual valve 12, and the ports 124,126,128 respectively in the shift valve 14, to exhaust when required, as will be described in more detail below. The solenoid valves 16,18,20 are actuated by a control module (Figure 15), which monitors various parameters associated with the vehicle including the transmission output speed or vehicle speed, the position of the engine throttle, and the position of the spool 64 in the manual valve 12, and preferably also accelerator pedal position. The control module compares the transmission output speed or vehicle speed with the throttle position, and actuates the solenoid valves 16,18,20 accordingly, as will be explained in more detail below. The control module is also set such that actuation of the solenoid valves 16,18,20 by the control module is only possible when the spool 64 of the manual valve 12 is in the Drive (D) position, and preferably only when the accelerator pedal is depressed. In their de-actuated state or on failure of the control module, the solenoid valves 16,18,20 are closed.

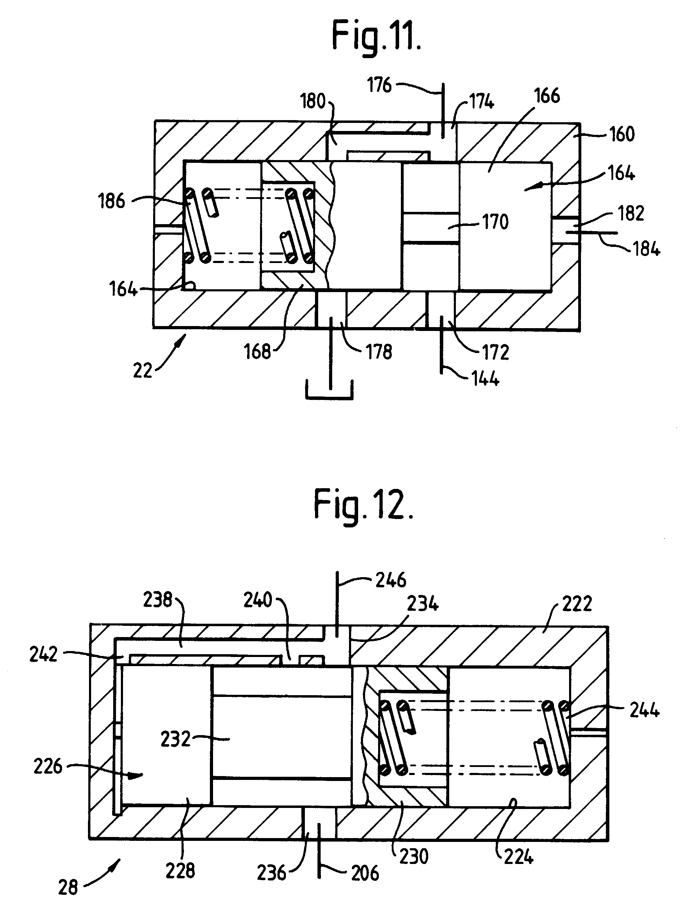

The pressure application valve 22 is shown in more detail in Figure 11 and comprises a housing 160 having a longitudinally extending bore 162 therein. A spool 164 is slidably positioned in the bore 162. The spool 164 comprises a pair of spaced lands 166,168 separated by a portion of reduced diameter 170. The housing 160 has a first pair of ports 172,174, the axes of which lie in the same radially extending plane. Port 172 defines an inlet port and is connected by fluid line 144 to port 136 in the shift valve 14. Port 174 defines an outlet port and is connected to the other end 218 of ball valve 40 by fluid line 176. The housing 160 has a second pair of ports 178,180, the axes of which lie in the same radially extending plane, but axially spaced from ports 172,174. Port 178 is connected to exhaust. Port 180 is connected to port 174. The housing 160 also has an axially extending port 182 in one end thereof which is connected by fluid line 184 to the friction device 52. Port 182 defines a control port. The spool 164 is biased towards the control port 182 by a spring 186. In the rest position shown in Figure 11, the inlet and outlet ports 172 and 174 are fluidly connected, and the port 178 is isolated from port 180 by land 168. As fluid pressure increases at control port 182, the spool 164 is moved against the bias of the spring 186 to bring land 166 into a position which fluidly isolates the inlet and outlet ports 172 and 174 from one another, but which opens a fluid connection between ports 178 and 180 to connect outlet port 174 to exhaust.

Pressure application valve 24 has a similar arrangement to pressure application valve 22 with a spool 188, an inlet port 190 connected to fluid line 144 and a port 198 connected to outlet port 192. However, outlet port 192 is connected to pressure control valve 32 by way of fluid line 194; port 196 is connected to fluid lines 148 and 150; and control port 200 is connected to fluid line 146. Pressure application valve 26 also has a similar arrangement to pressure application valve 22 with a spool 201, an inlet port 202 connected to fluid line 144, port 208 connected to exhaust, and port 210 connected to outlet port 204. However, outlet port 204 is connected to pressure control valve 28 by way of fluid line 206; and control port 212 is connected to fluid lines 148 and 150.

The ball valve 40 comprises a ball 214 movable between one end 216 and the other end 218. As mentioned above, said one end 216 is connected to fluid line 90, and said other end 218 is connected to fluid line 176. Intermediate the two ends 216,218 the ball valve 40 is connected to the pressure control valve 36 by way of fluid line 220. The ball 214 is movable between the two ends 216,218 to connect fluid line 220 to fluid line 90 when the fluid is pressurised in fluid line 90, or to connect fluid line 220 to fluid line 176 when the fluid is pressurised in fluid line 176.

The pressure control valve 28 is shown in more detail in Figure 12. The pressure control valve 28 comprises a housing 222 having a longitudinally extending bore 224 therein. A spool 226 is slidably positioned in the bore 224. The spool 226 comprises a pair of spaced lands 228,230 separated by a portion of reduced diameter 232. The housing 222 has a pair of ports 234,236 which are substantially centrally positioned. The axes of the ports 234,236 each lie in a radially extending plane, with the planes being aligned or slightly spaced from one another in an axial direction. Port 234 is connected by a fluid line 238 to ports 240 and 242. Port 240 is positioned adjacent port 234, and port 242 is positioned at one end on the bore 224. The fluid line 238 is dimensioned to act as a restrictor, or may have a restrictor therein. The spool 226 is biased towards the said one end of the bore 224 by a spring 244. Port 236 defines a pressure inlet for the pressure control valve 28 and is connected to fluid line 206. Port 234 defines a pressure outlet for the pressure control valve 28 and is connected to actuate the friction device 46 by way of fluid line 246. In use, when fluid pressure is initially applied at the inlet port 236, fluid pressure is also applied to the friction device 46 (see line A to B on the graph in Figure 13) by way of outlet port 234 and the spool 226 stays in the rest position shown in Figure 12. At point B, the friction elements of the friction device 46 make contact, and further increases in fluid pressure at the friction device 46 (from points B to C of Figure 13) provide a feedback fluid pressure through the fluid line 238 to move the spool 226 away from the said one end of the bore 224 against the bias of the spring 244. At point C, the land 230 engages the housing 222 at the other end of the bore 224. The axial length of the portion 232 of the spool 226 is such that fluid flow is still possible between the inlet and outlet ports 236 and 234. Consequently, the full fluid pressure applied to inlet port 236 will result in full pressure being applied to the friction device 46 (points C to D of Figure 13). This arrangement provides for modulated application of the fluid pressure to the friction device 46 rather than using fluid flow (as with previously known arrangements) which can be affected by changes in fluid viscosity or temperature. Fluid pressure to the friction device 46 is increased gradually providing a smoother actuation of the friction device, and hence a smoother gear change. This arrangement also automatically compensates for any wear between the friction elements of the friction device 46.

The pressure control valves 30,32,34,36,38 are substantially the same as pressure control valve 28. Pressure control valve 30 has a spool 247, an inlet port 248 connected to fluid line 146 and an outlet port 250 which is connected to actuate friction device 48 by way of fluid line 252. Pressure control valve 32 has a spool 253, an inlet port 254 connected to fluid line 194 and an outlet port 256 which is connected to actuate friction device 50 by way of fluid line 258. Pressure control valve 34 has a spool 259, an inlet port 260 connected to fluid line 152 and an outlet port 262 which is connected to actuate friction device 52 by way of fluid line 264, and is also connected to fluid line 184. Pressure control valve 36 has a spool 265, an inlet port 266 connected to fluid line 220 and an outlet port 268 which is connected to actuate friction device 54 by way of fluid line 270. Pressure control valve 38 has a spool 271, an inlet port 272 connected to fluid line 90 and an outlet port 274 which is connected to actuate friction device 56 by way of fluid line 276.

For the Park (P) mode of the transmission, fluid pressure generated by the pump 42 passes straight to exhaust by way of ports 92 and 96 in the manual valve 12 (as seen in Figure 1). Any pressure in the fluid in any of the fluid lines of the hydraulic control circuit 10 is exhausted. The spools of the shift valve 14, pressure application valves 22,24,26, and the pressure control valves 28-38 all remain in their rest position; the solenoid valves 16,18,20 are closed; and all the friction devices 46-56 remain disengaged. In the Park mode the control module actuates a device (not shown) to lock one or more of the gears in the transmission.

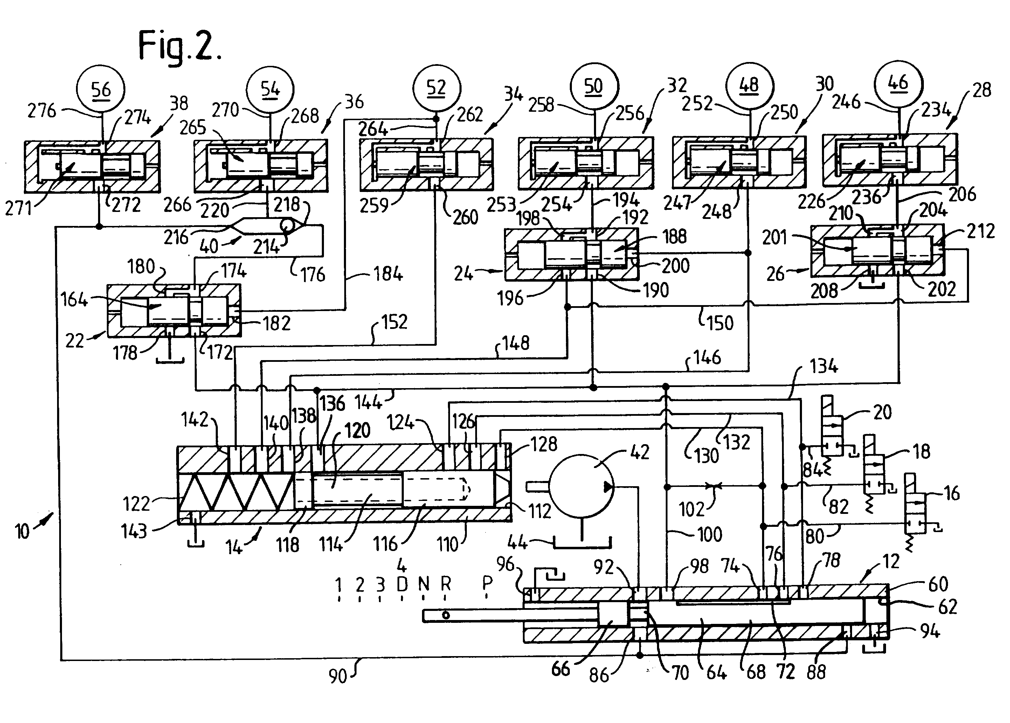

For the Reverse (R) mode, the vehicle operator moves the spool 64 of the manual valve 12 to the position shown in Figure 2. This brings the reduced diameter portion 70 of the spool 64 into alignment with the ports 92 and 86, and the fluid in fluid line 90 and in inlet port 272 of pressure control valve 38 is pressurised. As described above, the pressurised fluid moves the spool 271 away from its rest position, and actuates the friction device 56. Also, the pressurised fluid in fluid line 90 acts on the ball 214 of ball valve 40 to close the said other end 218 of the ball valve to pressurise the fluid in fluid line 220 and inlet port 266 of pressure control valve 36. This pressurised fluid moves the spool 265 away from its rest position, and actuates the friction device 54. The friction devices 54,56 are actuated as described above with regard to Figure 13. The remaining fluid lines of the hydraulic control circuit 10 are still exhausted. The spools of the shift valve 14, pressure application valves 22,24,26, and the pressure control valves 28-34 all remain in their rest position; the solenoid valves 16,18,20 are de-actuated; and the friction devices 46-52 remain disengaged. Engagement of the friction devices 54 and 56 and disengagement of the friction devices 46-52 provides for actuation of the transmission in reverse mode - see Figure 14.

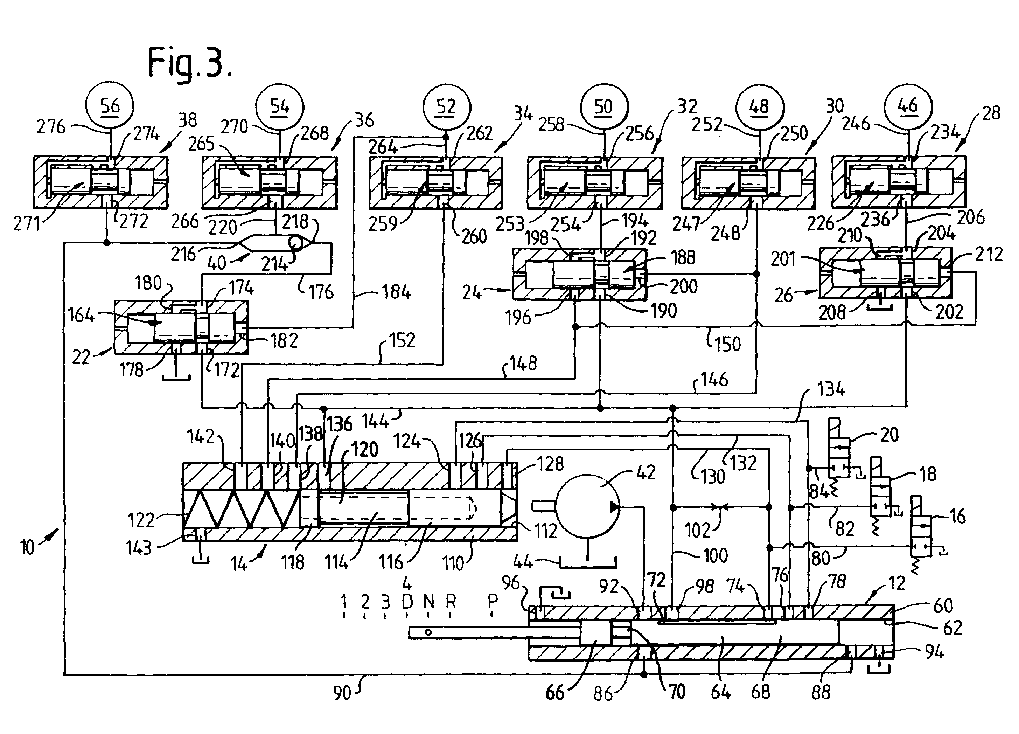

For the Neutral (N) mode, the vehicle operator moves the spool 64 of the manual valve to the position shown in Figure 3. This brings the land 68 across the port 92 to prevent pressurised fluid from the pump 42 reaching the rest of the hydraulic control circuit 10, and connects fluid line 90 to exhaust by way of ports 88 and 94 in the manual valve 12. Because of the connection of fluid line 90 to exhaust, the spools 265,271 of pressure control valves 36,38 respectively move back to their rest position, and the friction devices 54,56 become disengaged. The other fluid lines of the hydraulic control circuit 10 are connected to, or still connected to, exhaust. The spools of the shift valve 14, pressure application valves 22,24,26, and the pressure control valves 28-34 all remain in their rest position; the solenoid valves 16,18,20 are de-actuated; and the friction devices 46-52 remain disengaged.

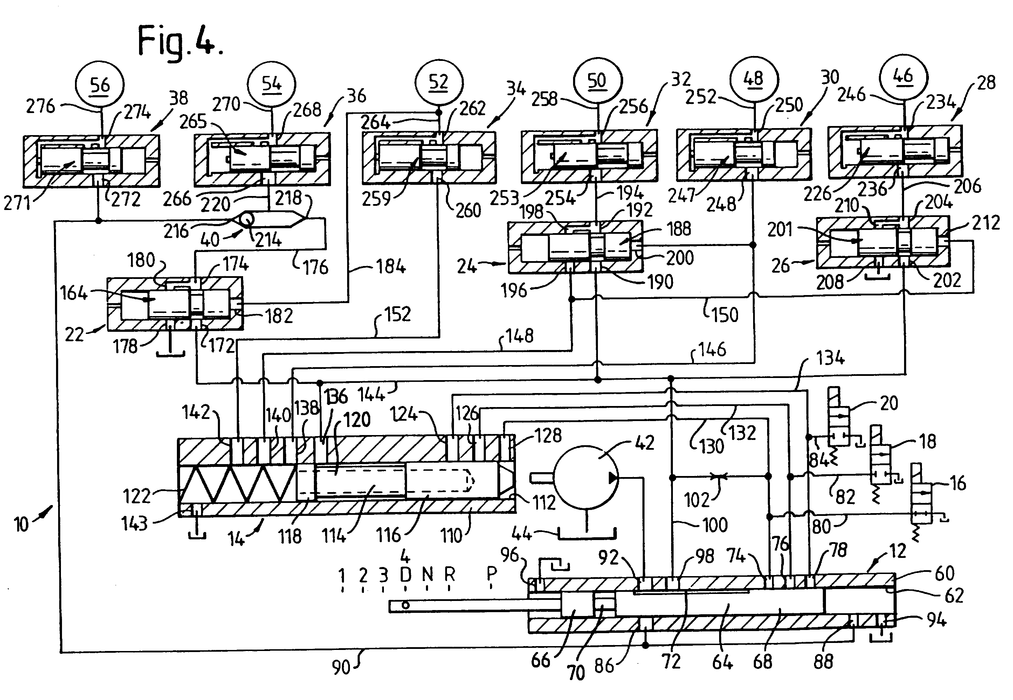

For the Drive (D) mode, the vehicle operator moves the spool 64 of the manual valve 12 to the position shown in Figures 4 to 7. This brings the groove 72 in the land 68 of the spool 64 into a position by which it fluidly connects ports 92 and 98 to pressurise the fluid in fluid lines 100 and 144 and provide pressurised fluid at the inlet ports 172,190,202 of each pressure application valve 22,24,26 respectively.

When the control module monitors a requirement for the transmission to be in first gear the solenoid valve 16 is opened (Figure 4), and the solenoid valves 18,20 can be opened or closed or left closed. Fluid can pass through restrictor 102 and through fluid line 80 and solenoid valve 16 to exhaust. However, the restrictor 102 is sized to prevent a collapse of fluid pressure in fluid line 100 and hence in the other pressurised parts of the hydraulic control circuit 10. Port 128 of shift valve 14 is connected to exhaust by way of fluid lines 130 and 80 and solenoid valve 16 thereby ensuring that the spool 114 of the shift valve is in the rest position. Fluid pressure is exhausted in fluid line 90 through ports 88 and 94 in manual valve 12, in fluid lines 184 and 152 through ports 142 and 143 in shift valve 14, in fluid line 146 through ports 138 and 143 in shift valve 14, and in fluid lines 148 and 150 through ports 140 and 143 in shift valve 14. This arrangement ensures that the friction devices 56, 52 and 48 are disengaged, and that the spools 164, 188 and 201 of pressure application valves 22,24,26 respectively remain in their rest position (as the pressure at control port 182,200,212 is exhausted through fluid lines 184,152; 146; and 150,148 respectively). As the spools 164, 188 and 201 of pressure application valves 22,24,26 respectively remain in their rest position, the pressurised fluid at the inlet port 172,190,202 of each pressure application valve pressurises the fluid in the fluid lines 176,194,206 respectively by way of outlet ports 174,192,204 respectively. Pressurised fluid in fluid line 176 acts on the ball 214 of ball valve 40 to close the said one end 216 of the ball valve to provide pressurised fluid in fluid line 220. The pressurised fluid in fluid lines 206,194,220 pressurises the fluid at the inlet ports 236,254,266 respectively of pressure control valves 28,32,36 respectively. This pressurised fluid at the inlet ports 236,254,266 moves the spools 226,253,265 respectively of the pressure control valves 28,32,36 respectively away from their rest position, and actuates the friction devices 46,50,54. The friction devices 46,50,54 are actuated as described above with regard to Figure 13. The engagement of the friction devices 46, 50, and 54 and the disengagement of the friction devices 48, 52 and 56 provides for actuation of the transmission in first gear of forward drive - see Figure 14.

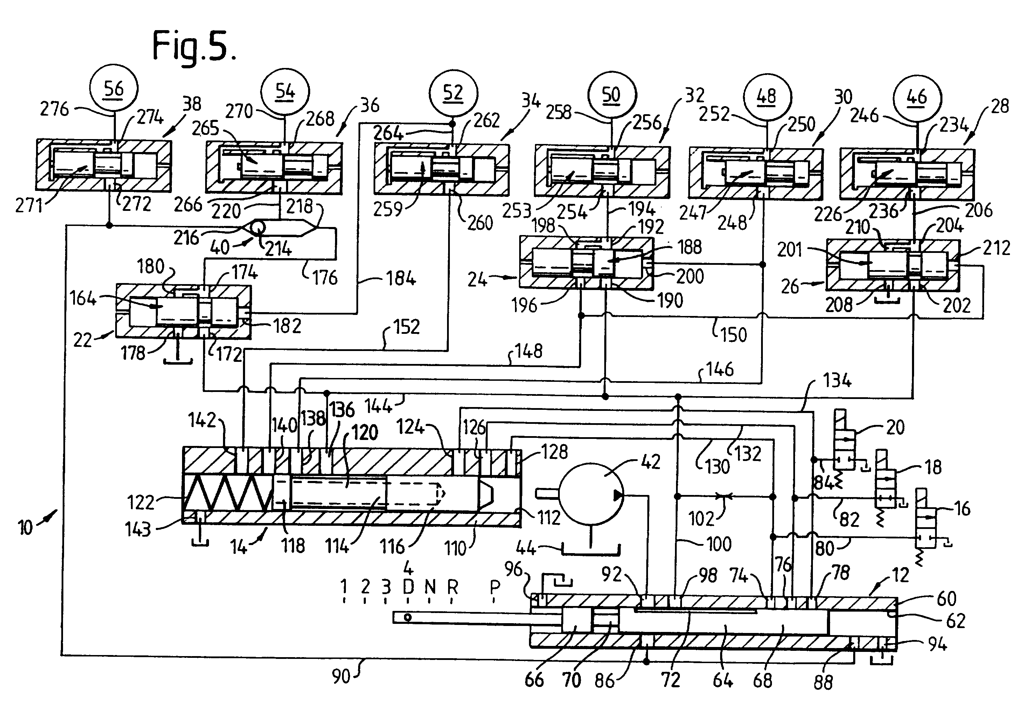

When the control module monitors a requirement for the transmission to be in second gear the solenoid valve 18 is opened (Figure 5), the solenoid valve 16 is closed or left closed, and the solenoid valve 20 can be opened or closed. Fluid in fluid line 130 and port 128 of shift valve 14 is pressurised by way of restrictor 102 to move the spool 114 of the shift valve away from said one end thereof against the bias of the spring 122. Port 126 of shift valve 14 is connected to exhaust by way of fluid lines 132 and 82 and solenoid valve 18 thereby limiting the movement of the spool 114 of the shift valve. This movement of the spool 114 provides a fluid connection between ports 136 and 138 due to the positioning of the portion 120 of the spool. Fluid in fluid line 146 is therefore pressurised, thereby pressurising the fluid at the control port 200 of pressure application valve 24. The pressurised fluid at control port 200 moves the spool 188 in the pressure application valve 24 to block the fluid connection between the inlet and outlet ports 190,192, but to open a fluid connection between fluid lines 148 and 194 by way of ports 196 and 198. Fluid pressure is exhausted in fluid line 90 through ports 88 and 94 in manual valve 12, in fluid lines 184 and 152 through ports 142 and 143 in shift valve 14, and in fluid lines 148 and 150 through ports 140 and 143 in shift valve 14. This arrangement ensures that the friction devices 56, 52 and 50 are disengaged, and that the spools 164 and 201 of pressure application valves 22,26 respectively remain in their rest position (as the pressure at control ports 182,212 is exhausted through fluid lines 184,152; and 150,148 respectively). As the spools 164 and 201 of pressure application valves 22,26 respectively remain in their rest position, the pressurised fluid at the inlet port 172,202 of these pressure application valves pressurises the fluid in the fluid lines 176,206 respectively by way of outlet ports 174,204 respectively. Pressurised fluid in fluid line 176 acts on the ball 214 of ball valve 40 to close the said one end 216 of the ball valve to provide pressurised fluid in fluid line 220. The pressurised fluid in fluid lines 206,146,220 pressurises the fluid at the inlet ports 236,248,266 respectively of pressure control valves 28,30,36 respectively. This pressurised fluid at the inlet ports 236,248,266 moves the spools 226,247,265 respectively of the pressure control valves 28,30,36 respectively away from their rest position, and actuates the friction devices 46,48,54. The friction devices 46,48,54 are actuated as described above with regard to Figure 13. The engagement of the friction devices 46, 48, and 54 and the disengagement of the friction devices 50, 52 and 56 provides for actuation of the transmission in second gear of forward drive - see Figure 14.

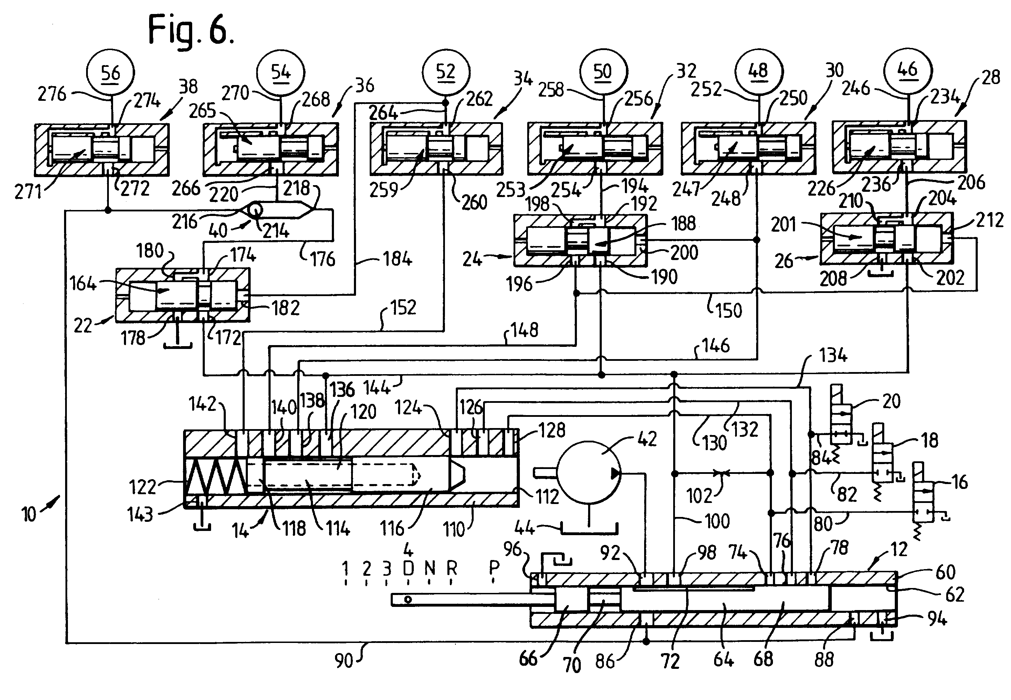

When the control module monitors a requirement for the transmission to be in third gear the solenoid valve 20 is opened (Figure 6), and the solenoid valves 16,18 are closed or left closed. Fluid in fluid line 130 and port 128 of shift valve 14 is pressurised by way of restrictor 102 to move the spool 114 of the shift valve away from said one end thereof against the bias of the spring 122. Port 124 of shift valve 14 is connected to exhaust by way of fluid lines 134 and 84 and solenoid valve 20 thereby limiting the movement of the spool 114 of the shift valve. This movement of the spool 114 provides a fluid connection between ports 136, 138 and 140 due to the positioning of the portion 120 of the spool. Fluid in fluid lines 146, 148 and 150 is therefore pressurised, thereby pressurising the fluid at the control ports 200,212 of pressure application valves 24,26 respectively. The pressurised fluid at control ports 200,212 moves the spools 188,201 in the pressure application valves 24,26 respectively to block the fluid connection between the respective inlet and outlet ports 190,192; 202,204, but to open a fluid connection between fluid lines 148 and 194 by way of ports 196 and 198, and between fluid line 206 and exhaust by way of ports 208 and 210. Fluid pressure is exhausted in fluid line 90 through ports 88 and 94 in manual valve 12, and in fluid lines 184 and 152 through ports 142 and 143 in shift valve 14. This arrangement ensures that the friction devices 56, 52 and 46 are disengaged, and that the spool 164 of pressure application valve 22 remains in its rest position (as the pressure at control port 182 is exhausted through fluid lines 184 and 152). As the spool 164 of pressure application valve 22 remains in its rest position, the pressurised fluid at the inlet port 172 of this pressure application valve 22 pressurises the fluid in the fluid lines 176 by way of outlet ports 174. Pressurised fluid in fluid line 176 acts on the ball 214 of ball valve 40 to close the said one end 216 of the ball valve to provide pressurised fluid in fluid line 220. Although the spool 188 of pressure application valve 24 has moved away from its rest position, the fluid in fluid line 194 is still pressurised by way of ports 196,198 and the pressurised fluid in fluid line 148. The pressurised fluid in fluid lines 146,194,220 pressurises the fluid at the inlet ports 248,254,266 respectively of pressure control valves 30,32,36 respectively. This pressurised fluid at the inlet ports 248,254,266 moves the spools 247,253,265 respectively of the pressure control valves 30,32,36 respectively away from their rest position, and actuates the friction devices 48,50,54. The friction devices 48,50,54 are actuated as described above with regard to Figure 13. The engagement of the friction devices 48, 50, and 54 and the disengagement of the friction devices 46, 52 and 56 provides for actuation of the transmission in third gear of forward drive - see Figure 14.

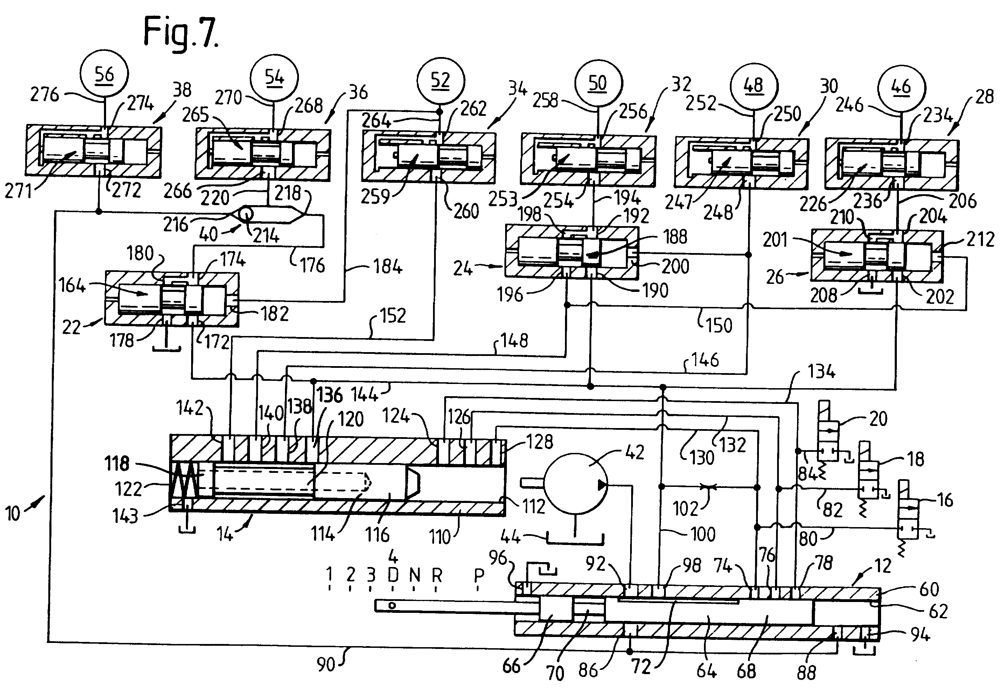

When the control module monitors a requirement for the transmission to be in fourth gear all the solenoid valves 16,18,20 are closed or left closed (Figure 7). Fluid in fluid line 130 and port 128 of shift valve 14 is pressurised by way of restrictor 102 to move the spool 114 of the shift valve away from said one end thereof against the bias of the spring 122. None of the ports 124,126,128 of shift valve 14 are connected to exhaust and so the spool 114 of the shift valve is moved to its maximum extent. This movement of the spool 114 provides a fluid connection between ports 136, 138, 140 and 142 due to the positioning of the portion 120 of the spool. Fluid in fluid lines 146, 148, 150, 152 and 184 is therefore pressurised, thereby pressurising the fluid at the control ports 182,200,212 of all the pressure application valves 22,24,26 respectively. The pressurised fluid at control ports 182,200,212 moves the spools 164,188,201 in the pressure application valves 22,24,26 respectively to block the fluid connection between the respective inlet and outlet ports 172,174; 190,192; 202,204, but to open a fluid connection between fluid line 176 and exhaust by way of ports 178 and 180, between fluid lines 148 and 194 by way of ports 196 and 198, and between fluid line 206 and exhaust by way of ports 208 and 210. Fluid pressure is exhausted in fluid line 90 through ports 88 and 94 in manual valve 12, and in fluid line 220 by way of ball valve 40 and fluid line 176 or 90. This arrangement ensures that the friction devices 56, 54 and 46 are disengaged. Although the spool 188 of pressure application valve 24 has moved away from its rest position, the fluid in fluid line 194 is still pressurised by way of ports 196,198 and the pressurised fluid in fluid line 148. The pressurised fluid in fluid lines 152,194,220 pressurises the fluid at the inlet ports 248,254,260 respectively of pressure control valves 30,32,34 respectively. This pressurised fluid at the inlet ports 248,254,260 moves the spools 247,253,259 respectively of the pressure control valves 30,32,34 respectively away from their rest position, and actuates the friction devices 48,50,52. The friction devices 48,50,52 are actuated as described above with regard to Figure 13. The engagement of the friction devices 48, 50, and 52 and the disengagement of the friction devices 46, 54 and 56 provides for actuation of the transmission in fourth gear of forward drive - see Figure 14.

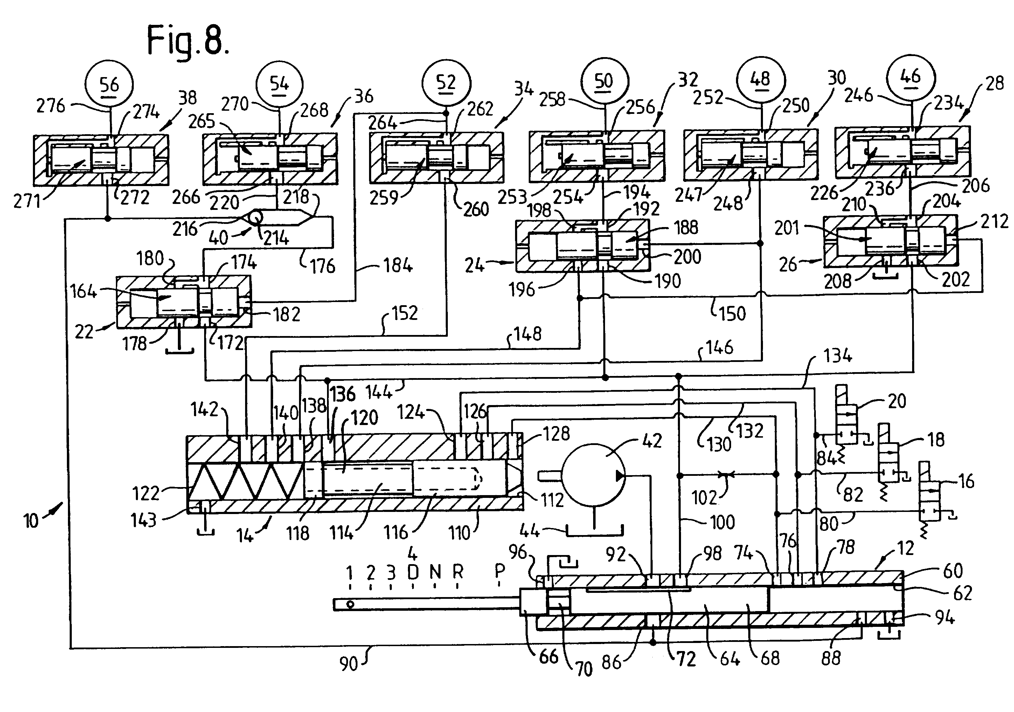

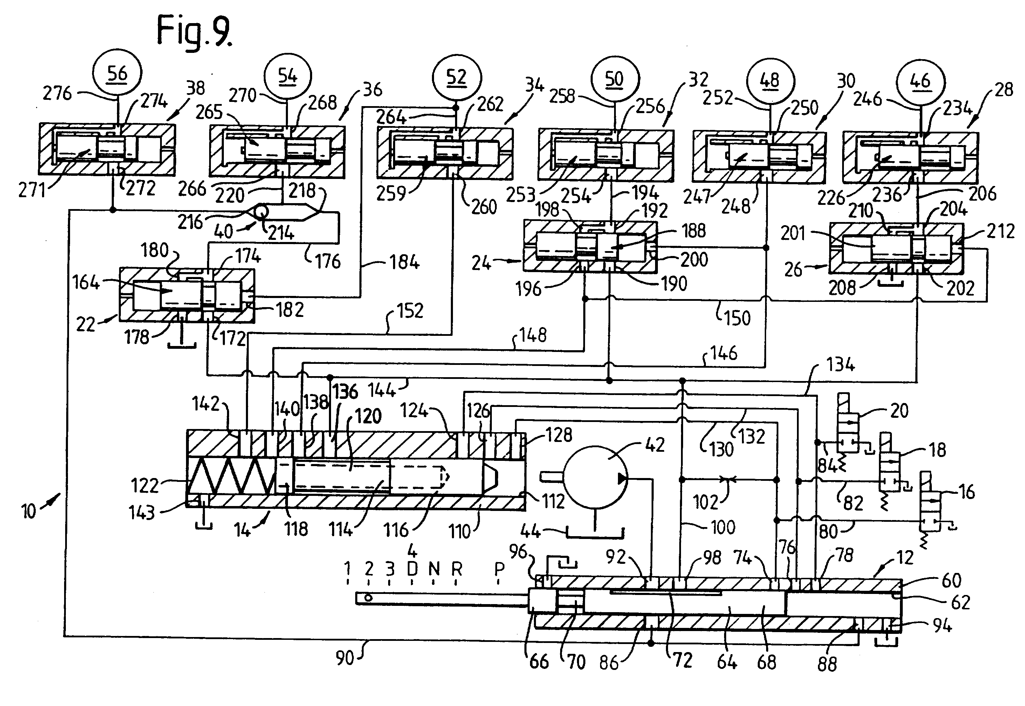

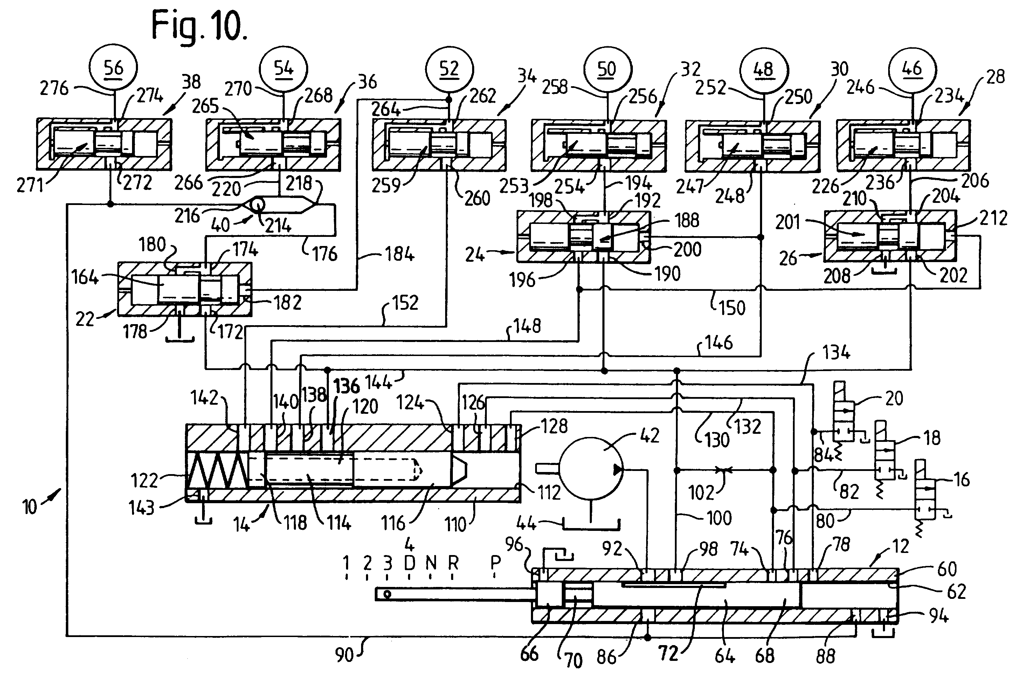

If the vehicle operator wishes to manually operate the transmission, from personal preference or because of failure of the control module, the vehicle operator can do so by simply moving the spool 64 of the manual valve 12. For first gear operation, the spool 64 is moved to the position shown in Figure 8. In this case, with the solenoid valves 16,18,20 closed (either due to the position of the spool 64 being away from the position for Drive (D) mode or due to the failure of the control module), the fluid line 130 and port 128 of shift valve 14 are exhausted by way of ports 74 and 94 in the manual valve 12. The remaining elements of the hydraulic control circuit 10 operate in exactly the same way as shown in regard to Figure 4 to provide first gear ratio for forward drive. For second gear operation, the spool 64 is moved to the position shown in Figure 9. In this case, with the solenoid valves 16,18,20 closed, the fluid line 132 and port 126 of shift valve 14 are exhausted by way of ports 76 and 94 in the manual valve 12. The remaining elements of the hydraulic control circuit 10 operate in exactly the same way as shown in regard to Figure 5 to provide second gear ratio for forward drive. For third gear operation, the spool 64 is moved to the position shown in Figure 10. In this case, with the solenoid valves 16,18,20 closed, the fluid line 134 and port 124 of shift valve 14 are exhausted by way of ports 78 and 94 in the manual valve 12. The remaining elements of the hydraulic control circuit 10 operate in exactly the same way as shown in regard to Figure 6 to provide third gear ratio for forward drive. For fourth gear operation, the vehicle operator moves the spool 64 to the Drive (D) position. In this case, with the solenoid valves 16,18,20 closed, none of the ports 124,126,128 of shift valve 14 are exhausted. The elements of the hydraulic control circuit 10 operate in exactly the same way as shown in regard to Figure 7 to provide fourth gear ratio for forward drive.

An example of a circuit for use in the control module is shown in Figure 15. This circuit comprises a speed sensor 280 (which is preferably in the form of a magnetic pick-up) associated with either the output shaft of the transmission or the vehicle wheels which sends a signal through a digital-to-analogue converter 282 to a first amplifier 284. A throttle position sensor 286 (which is preferably in the form of a potentiometer) provides a signal to second and third amplifiers 288,290. A kick-down switch 292 (which is operable by movement of the accelerator pedal) can be connected across the throttle position sensor 286 to override the signal from the throttle position sensor when the vehicle operator requires a downshift in the transmission. The output signals from the first and second amplifiers 284,288 are fed to a summation circuit 294 along with a signal from a switch 296, preferably positioned in the vehicle dashboard, which allows the vehicle operator to select the value of engine braking required. If the switch 296 is in position "0" there is no automatic downshift, on accelerator pedal release, to decelerate the vehicle by engine braking. If the switch 296 is placed in position "I", the circuit is set to provide automatic downshift, on accelerator pedal release, to decelerate the vehicle by engine braking at a normal (average) speed; for example, fourth to third ratio downshift at 90 kph; third to second ratio downshift at 50 kph; and second to first ratio downshift at 20 kph. If the switch 296 is placed in position "II", the circuit is set to provide automatic downshift, on accelerator pedal release, to decelerate the vehicle by engine braking at higher speeds; for example, fourth to third ratio downshift at 120 kph; third to second ratio downshift at 80 kph; and second to first ratio downshift at 40 kph. The switch 296 may be in series with a brake pedal switch 298 which is normally open but which closes when the brake pedal is slightly depressed to downshift the transmission for automatic deceleration by use of engine braking.

The output from the summation circuit 294 is fed to a comparator 300,302,304 and a driver or relay 306,308,310 associated with, and controlling the operation of, each solenoid valve 16,18,20 respectively. The output from the third amplfier 290 is also fed to the comparator 304. The outputs from the first amplifier 284 and from the comparator 302 are fed to another comparator 312 and a driver or relay 314 associated with, and controlling the operation of, a solenoid valve 316 controlling operation of the vehicle clutch (not shown) which may be a torque converter clutch or an open clutch. The circuit also includes a number of variable resistors R, the value of which is set to provide upshifting and downshifting of the transmission at predetermined vehicle speeds, and suitable associated operation of the clutch. Although not shown, the circuit includes a spool position sensor switch in its power supply circuit which is associated with the spool 64 of the manual valve 12. The arrangement is such that the solenoid valves 16,18,20 can only be actuated when the spool position sensor switch indicates that the spool 64 is in the Drive (D) position. As an option, the circuit may also include a mode switch (not shown) in its power supply circuit which is operable by the vehicle operator to allow selection between automatic and manual operation of the transmission. In a further option, switches 307, 309, 311 may be connected in series with solenoid valves 16, 18, 20 respectively. These switches 307, 309, 311 may be part of, or actuated by the spool position sensor switch mentioned above, and are biased to a normally open position. When the spool 64 is in the position shown in Figure 8 for the first gear operation, switch 307 is closed to open solenoid valve 16. Switches 309 and 311 are open. Consequently, fluid line 130 and port 128 of shift valve 14 can also be exhausted by way of line 80 and solenoid valve 16. When the spool 64 is in the position shown in Figure 9 for second gear operation, switch 309 is closed to open solenoid valve 18. Switches 307 and 311 are open. Consequently, fluid line 132 and port 126 of shift valve 14 can also be exhausted by way of line 82 and solenoid valve 18. When the spool 64 is in the position shown in Figure 10 for third gear operation, switch 311 is closed to open solenoid valve 20. Switches 307 and 309 are open. Consequently, fluid line 134 and port 124 of shift valve 14 can also be exhausted by way of line 84 and solenoid valve 20. As an alternative to this type of control module, a computer based control module could be used instead.

The present invention provides an arrangement for an automatic transmission which can easily be operated as a manual transmission, provides engine braking on all drives of the transmission, and improves fuel economy. The present invention only requires a single shift valve and a small number of other valves (pressure application valves and pressure control valves) which are of simple design and easy to manufacture, operates using a substantially constant hydraulic fluid pressure, and improves the life expectancy of the friction devices.

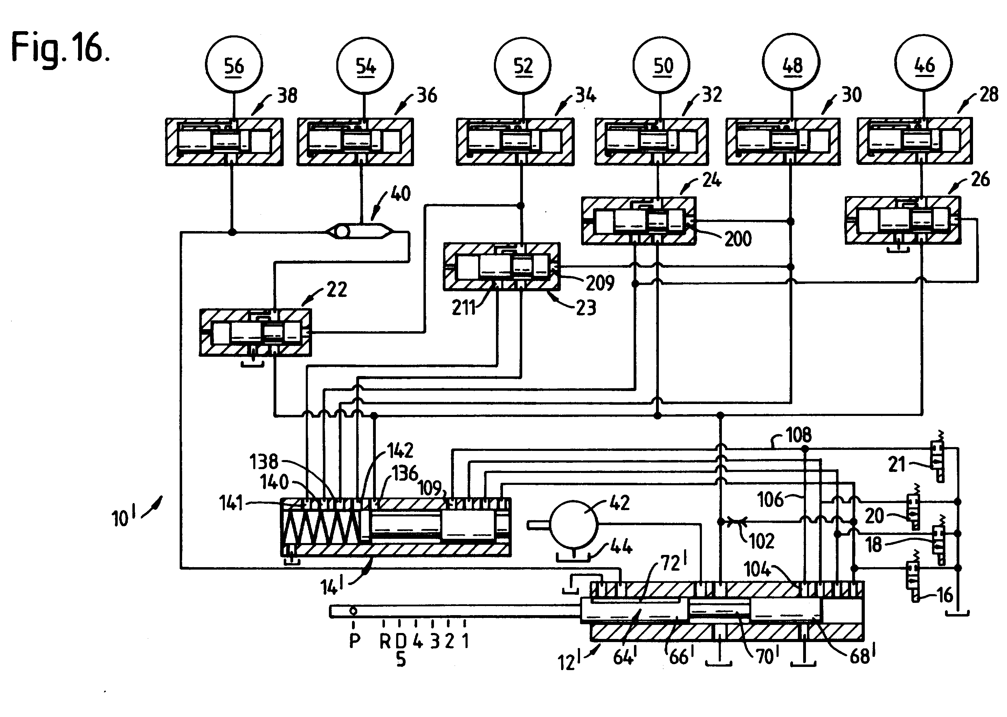

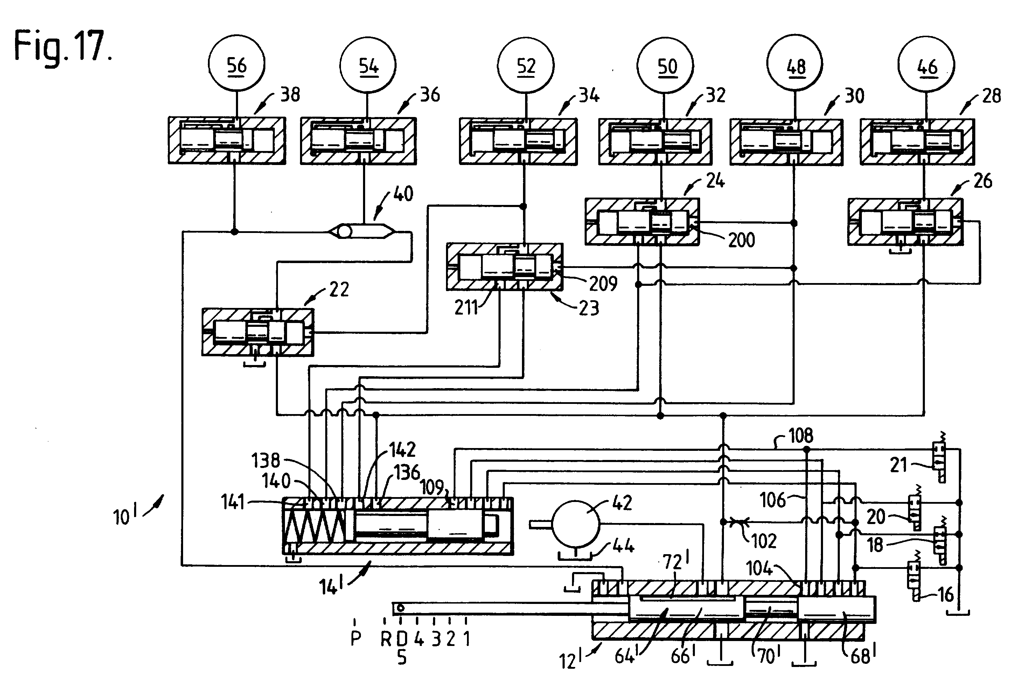

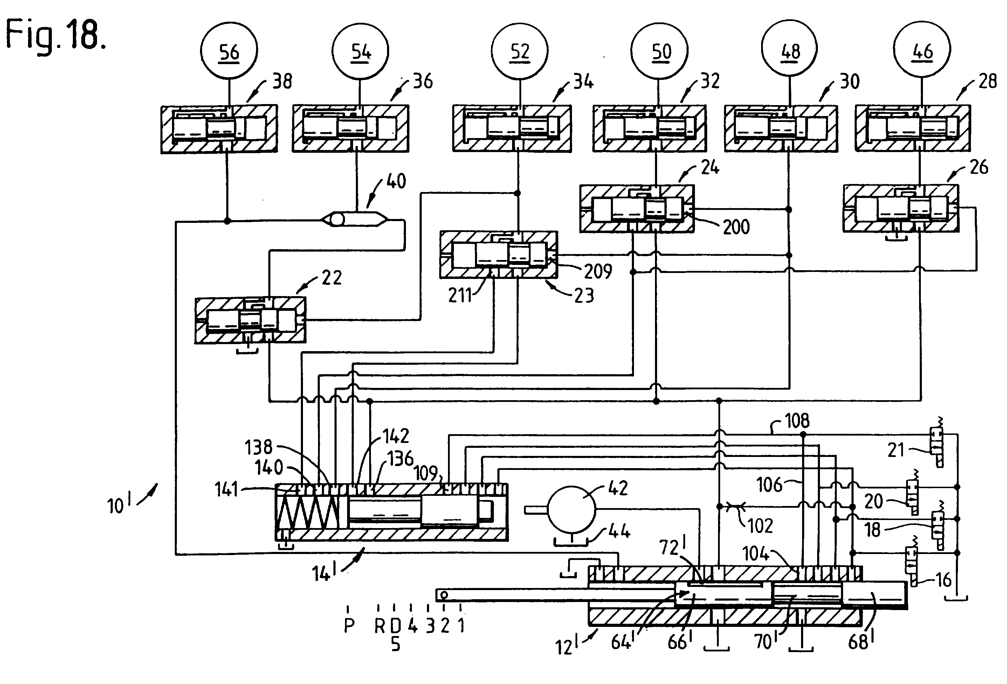

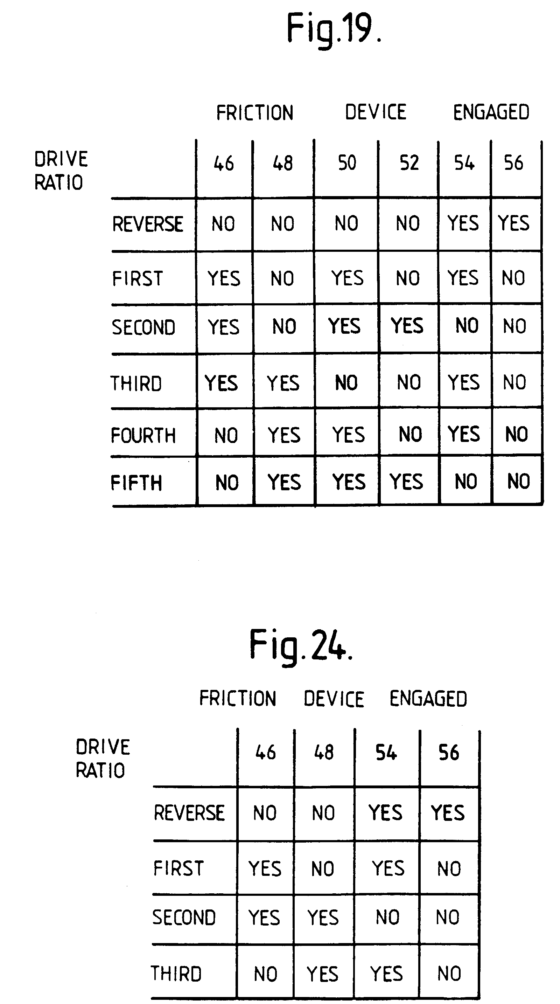

Referring to the arrangement shown in Figures 16 to 18, an alternative hydraulic control circuit 10' in accordance with the present invention is shown for use with a transmission having five forward gear ratios and one reverse gear ratio. In Figures 16 to 18, like parts have been given the same reference numbers as those in Figures 1 to 10, with modified parts being primed ('). The arrangement of the friction devices and gears (including the planetary gear sets) with the transmission, to provide the required drive ratios, is well known to those skilled in the art, and will not be described herein in detail. In order to provide the additional forward drive ratio (in comparison to Figures 1 to 10), the hydraulic control circuit 10' requires an additional solenoid valve 21, an additional pressure application valve 23, an additional port 104 in the manual valve 12', a modified spool valve 64' for the manual valve 12', and additional ports 109,141 in the shift valve 14'. Also, the relative axial positioning of the ports 136-142 in the shift valve 14' has been altered. The pressure application valve 21 is placed in the fluid line between the pressure control valve 34 and the shift valve 14', with its control port 209 fluidly connected to the control port 200 of pressure application valve 24. Port 211 of pressure application valve 23 is connected to port 141 of the shift valve 14' adjacent said other end of the shift valve. Port 109 of shift valve 14' can be fluidly connected to exhaust by way of fluid line 108 and solenoid valve 21, and to port 104 of manual valve 12' by way of fluid lines 106 and 108. The operation of the hydraulic control circuit 10' is substantially the same as that described above for hydraulic control circuit 10, with the friction devices 46-56 being engaged/disengaged in accordance with the table shown in Figure 19 to provide the required drive ratio. During Drive (D) mode, solenoid valve 16 must be open for first gear ratio; solenoid valve 16 must be closed and solenoid valve 18 must be open for second gear ratio; solenoid valves 16 and 18 must be closed and solenoid valve 20 must be open for third gear ratio; solenoid valves 16, 18 and 20 must be closed and solenoid valve 21 must be open for fourth gear ratio; and all the solenoid valves 16-21 must be closed for fifth gear ratio.

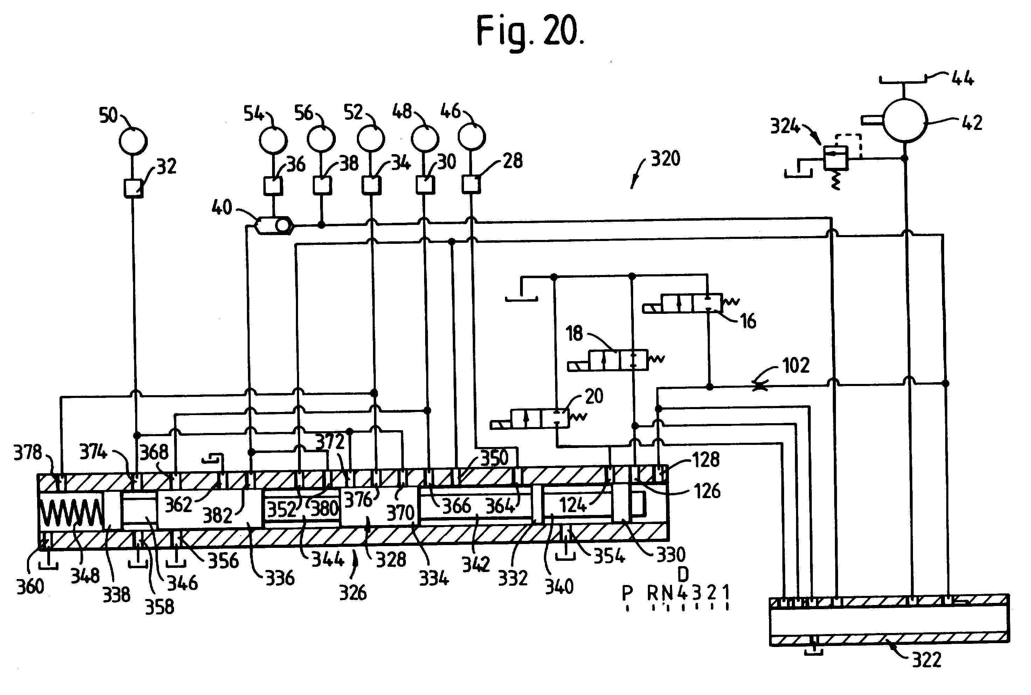

Although the above described embodiments include the use of pressure application valves to selectively operate the friction devices, such pressure application valves are not essential because suitable modification of the spool of the shift valve can make their presence unnecessary. An example of such an arrangement is shown in Figure 20. In this case the hydraulic control circuit 320 includes a manual valve 322 (the spool of which has been omitted for clarity), a pump 42, fluid reservoir 44, pressure relief valve 324, a restrictor 102 shift valve 326, ball valve 40, pressure control valves 28 to 38 (as described above), friction devices 46 to 56 (as described above), and solenoid valves 16 to 18 (as described above). The hydraulic control circuit 320 is for a transmission having four forward gear ratios and one reverse gear ratio. The arrangement of the friction devices and gear (including the planetary gear sets) with the transmission, to provide the required drive ratios, is well known to those skilled in the art, and will not be described herein in detail. The operation of the friction devices 46-56 is as described above with reference to Figure 14, and solenoid valves 16-18 are operated as described above for the embodiment shown in Figures 1 to 10. In the arrangement shown in Figure 20, the hydraulic control circuit 320 is set for placing the transmission in second gear, with the manual valve 322 placed in Drive (D) mode, solenoid valve 16 closed, and solenoid valve 18 open. The shift valve 326 has a spool 328 comprising five lands 330-338 separated by reduced diameter portions 340-346, the spool being biased by a spring 348 towards one end. Adjacent said one end are ports 128,126,124 associated with solenoid valves 16,18,20 respectively as in the embodiment described above with reference to Figures 1 to 10. The shift valve 326 also includes two ports 350,352 fluidly connected to each other and to the supply of fluid pressure from the manual valve 322; five ports 354-362 fluidly connected to exhaust; port 364 fluidly connected to pressure control valve 28 and friction device 46; two ports 366,368 fluidly connected to each other and to pressure control valve 30 and friction device 48; three ports 370,372,374 fluidly connected to each other and to pressure control valve 32 and friction device 50; two ports 376,378 fluidly connected to each other and to pressure control valve 34 and friction device 52; and two ports 380,382 fluidly connected to each other and to pressure control valve 36 and friction device 54 by way of ball valve 40. The relative position and spacing of the ports 350-382 in the axial direction, and the axial lengths of the lands 330-338 and portions 340-346 is predetermined to provide operation of the friction devices 46-56 in accordance with the table shown in Figure 14. For first gear operation in Drive (D) mode, solenoid valve 16 is open. For second gear operation in Drive (D) mode, solenoid valve 16 is closed and solenoid valve 18 is open. For third gear operation in Drive (D) mode, solenoid valves 16 and 18 are closed and solenoid valve 20 is open. For fourth gear operation in Drive (D) mode, all the solenoid valves 16,18,20 are closed. For Park (P) mode and Neutral (N) mode the manual valve 322 can be set to deliver the fluid pressure to exhaust as shown in Figures 1 and 3 respectively above. For Reverse (R) mode the manual valve 322 can be set to deliver fluid pressure directly to friction devices 54 and 56 as shown in Figure 2 above. For Park (P) mode, Reverse (R) mode, Neutral (N) mode, manual third gear (3) mode, manual second gear (2) mode, manual first gear (1) mode, or on failure of the control module (not shown) for the solenoid valves 16,18,20, the solenoid valves are closed in substantially the same arrangement as described above for Figures 1 to 10.

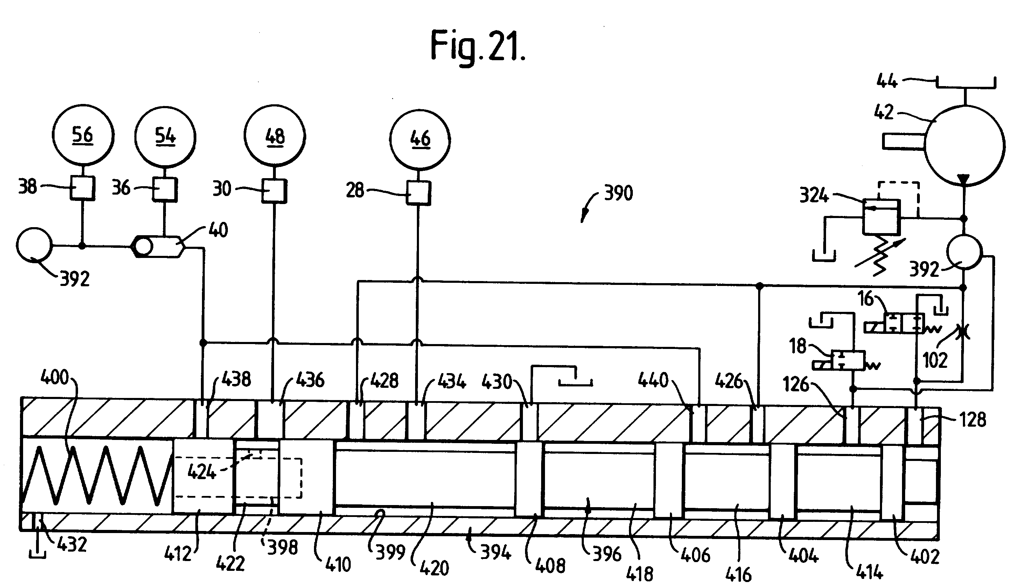

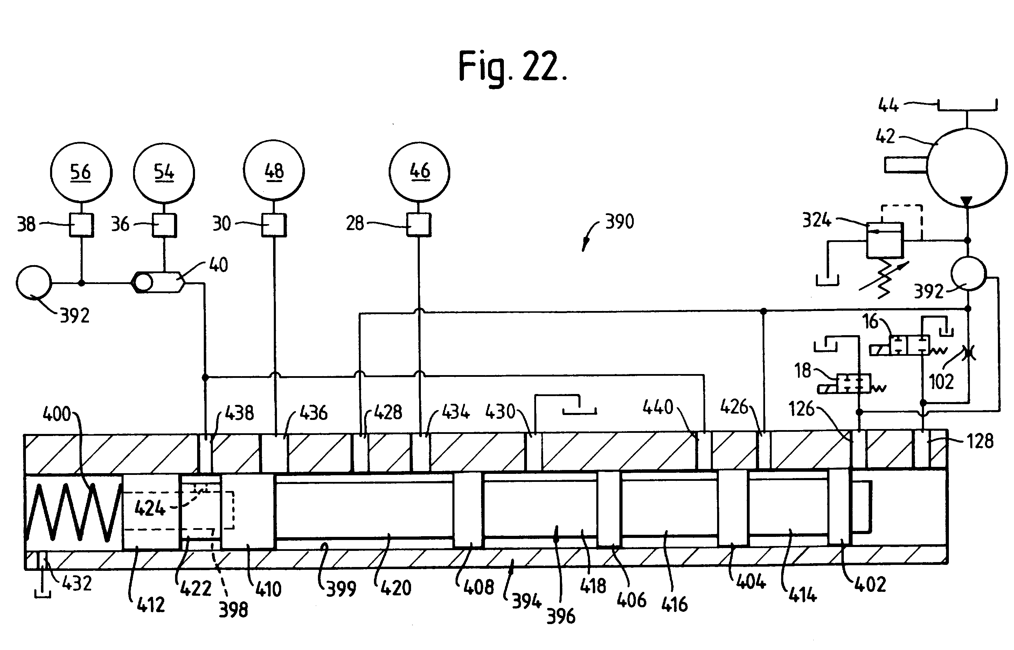

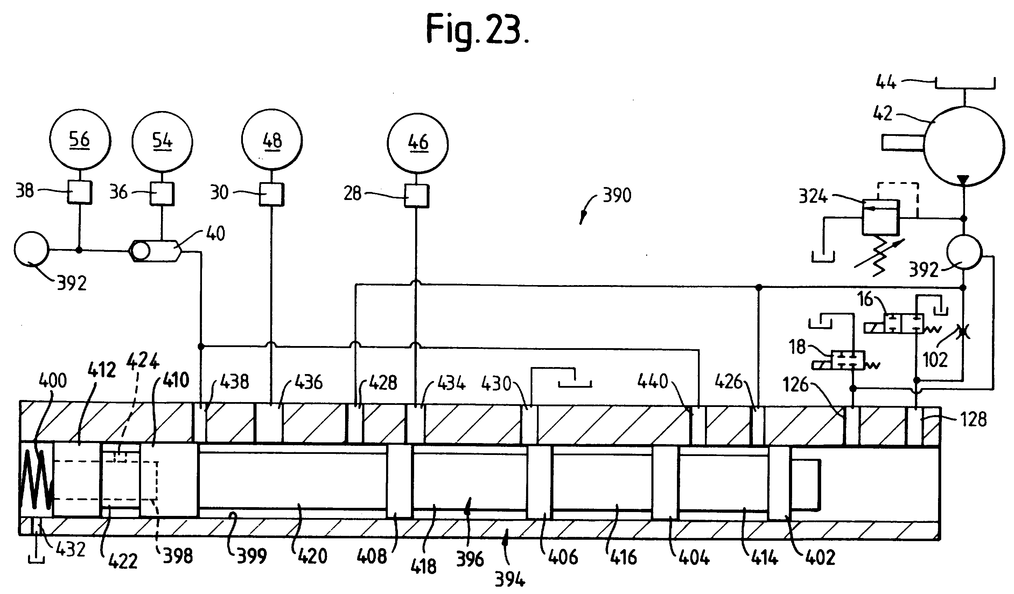

The embodiment of hydraulic control circuit 390 shown in Figures 21 to 23 is similar to that in Figure 20, except that the hydraulic control circuit is for a transmission having three forward gear ratios and one reverse gear ratio. The arrangement of the friction devices and gears (including the planetary gear sets) with the transmission to provide the required drive ratios, is well known to those skilled in the art, and will not be described herein in detail. The hydraulic control circuit 390 comprises a manual valve 392 (which is not shown in detail), a shift valve 394, a pump 42, a fluid reservoir 44, a pressure relief valve 324, a restrictor 102, two solenoid valves 16,18, a ball valve 40, four pressure control valves 28,30,36,38, and four friction devices 46,48,54,56. The friction devices 46,48,54,56 are operated in accordance with the table shown in Figure 24 to provide the required drive ratio from the transmission. The shift valve 394 has a spool 396 slidably positioned in a bore 399, the spool comprising six lands 402-412 separated by reduced diameter portions 414-422, and the spool being biased by a spring 400 towards one end. Adjacent said one end are ports 128,126 associated with solenoid valves 16,18 respectively as in the embodiment described above with reference to Figures 1 to 10. The shift valve 326 also includes two ports 426,428 fluidly connected to each other and to the supply of fluid pressure from the manual valve 392; two ports 430,432 fluidly connected to exhaust; port 434 fluidly connected to pressure control valve 28 and friction device 46; port 436 fluidly connected to pressure control valve 30 and friction device 48; and two ports 438,440 fluidly connected to each other and to pressure control valve 36 and friction device 54 by way of ball valve 40. The spool 396 also includes a bore 398 which extends in an axial direction, which opens into the bore 399 of the shift valve 394 adjacent the spring 400, and which connects with a radially extending through aperture 424 in the portion 422. The aperture 424 and bore 398 are connected to exhaust by way of port 432. The relative position and spacing of the ports 426-440 in the axial direction, and the axial lengths of the lands 402-412 and portions 414-422 is predetermined to provide operation of the friction devices 46,48,54,56 in accordance with the table shown in Figure 24. For first gear operation (Figure 21) in Drive (D) mode, solenoid valve 16 is open. For second gear operation (Figure 22) in Drive (D) mode, solenoid valve 16 is closed and solenoid valve 18 is open. For third gear operation (Figure 23) in Drive (D) mode, both solenoid valves 16,18 are closed. For Park (P) mode and Neutral (N) mode the manual valve 392 can be set to deliver the fluid pressure to exhaust as shown in Figures 1 and 3 respectively above. For Reverse (R) mode the manual valve 392 can be set to deliver fluid pressure directly to friction devices 54 and 56 as shown in Figure 2 above. For Park (P) mode, Reverse (R) mode, Neutral (N) mode, manual second gear (2) mode, manual first gear (1) mode, or on failure of the control module (not shown) for the solenoid valves 16,18, the solenoid valves are closed in substantially the same arrangement as described above for Figures 1 to 10.

## Claims

1. A hydraulic control circuit for a transmission for a vehicle, the transmission including at least four friction devices (46-56) and being capable of providing at least three forward gear ratios and one reverse gear ratio, the hydraulic control circuit comprising a source (42) of fluid pressure; fluid path selection means (40) fluidly connectable to one of the friction devices; a manual valve (12) fluidly connected to the source (42) and to the fluid path selection means (40), and fluidly connectable to another of the friction devices; a shift valve (14) comprising a housing (110) having a bore (112) extending in an axial direction, a spool (114) reciprocally mounted in the bore, and a number of ports (136-142) axially spaced from one another and extending radially through the housing into the bore, at least one of the ports (136) being fluidly connected to the manual valve (12), the spool (114) comprising a fluid path (120) in its external surface extending in the axial direction; and control means (74-78,16-18) for controlling the reciprocal movement of the spool (114) in the axial direction; wherein the manual valve (12) is operable to direct pressurised fluid from the source (42) either to the shift valve (14) for forward drive of the transmission, or to the fluid path selection (40) means and said another friction device (56) for reverse drive of the transmission; and wherein the control means is operable to move the spool (114) to predetermined positions relative to the ports (136-142) dependent on the required forward gear ratio whereby pressurised fluid is directed from said at least one port (136) along the fluid path (120) to one or more of the other ports; characterised in that the manual valve (12) is operable to direct pressurised fluid from the source (42) to exhaust (96) to prevent drive by the transmission; in that the said at least one port (136) of the shift valve (14) is fluidly connectable to the fluid path selection means (40) and to at least one (46,50) of the remaining friction devices; and in that the other port or ports (138-142) are fluidly connectable to some (48-52) of the remaining friction devices.

2. A hydraulic control circuit as claimed in Claim 1, wherein the fluid path selection means comprises a ball valve (40) having two fluid inlets (216,218) and one fluid outlet (220), the fluid outlet being fluidly connectable to said one friction device (54), and a ball (214) movable between the two fluid inlets and capable of closing one or the other of the fluid inlets.

3. A hydraulic control circuit as claimed in Claim 1 or Claim 2, further comprising a pressure control valve (28-38) associated with each friction device (46-56), each pressure control valve comprising a spool (226) reciprocally movable in a bore (224) to modulate the fluid pressure applied to its associated friction device.

4. A hydraulic control circuit as claimed in any one of Claims 1 to 3, further comprising at least two pressure application valves (22-26) fluidly connected with the ports (136-142) in the shift valve (14) and with each other, each pressure application valve comprising a spool (168) reciprocally movable in a bore (164) to allow or prevent pressurised fluid passing therethrough.

5. A hydraulic control circuit as claimed in any one of Claims 1 to 4, wherein the control means comprises at least two separate fluid lines (130-134) between the manual valve (12) and the shift valve (14), pressurised fluid being directed from the manual valve to one end of the spool (114) in the shift valve to provide the reciprocal movement of the spool in the shift valve, the spool in the shift valve being biased by a spring (122) against the action of the pressurised fluid.

6. A hydraulic control valve as claimed in Claim 5, wherein the control means further comprises a solenoid operated valve (16-18) positioned in each separate fluid line (130-134), and a control module for controlling the opening and closing of the solenoid operated valve, each solenoid valve being normally closed, but being openable to connect its associated fluid line to exhaust.

## Patentansprüche

1. Hydraulischer Steuerkreis für ein Getriebe für ein Fahrzeug, wobei das Getriebe zumindest vier Reibvorrichtungen (46-56) umfaßt und in der Lage ist, zumindest drei Vorwärtsübersetzungsverhältnisse und ein Rückwärtsübersetzungverhältnis zu liefern, wobei der hydraulische Steuerkreis umfaßt: eine Fluiddruckquelle (42); ein Fluidwegauswahlmittel (40), das über Fluid mit einer der Reibvorrichtungen verbunden werden kann; ein Handventil (12), das über Fluid mit der Quelle (42) und mit dem Fluidwegauswahlmittel (40) verbunden ist und über Fluid mit einer anderen der Reibvorrichtungen verbunden werden kann; ein Schiebeventil (14) mit einem Gehäuse (110), das eine Bohrung (112) aufweist, die sich in einer axialen Richtung erstreckt, einem Schieber (114), der hinund hergehend in der Bohrung angebracht ist, und einer Anzahl von Öffnungen (136-142), die axial voneinander beabstandet sind und sich radial durch das Gehäuse in die Bohrung erstrecken, wobei zumindest eine der Öffnungen (136) über Fluid mit dem Handventil (12) verbunden ist, und der Schieber (114) einen Fluidweg (120) in seiner Außenfläche umfaßt, der sich in der axialen Richtung erstreckt; und Steuermittel (74-78, 16-18) zum Steuern der hin- und hergehenden Bewegung des Schiebers (114) in der axialen Richtung; worin das Handventil (12) betreibbar ist, unter Druck gesetztes Fluid aus der Quelle (42) entweder zu dem Schiebeventil (14) für einen Vorwärtsantrieb des Getriebes oder zu dem Fluidwegauswahlmittel (40) und der anderen Reibvorrichtung (56) für einen Rückwärtsantrieb des Getriebes zu lenken; und worin das Steuermittel betreibbar ist, den Schieber (114) in vorbestimmte Positionen relativ zu den Öffnungen (136-142) abhängig von dem geforderten Vorwärtsübersetzungsverhältnis zu bewegen, wodurch unter Druck gesetztes Fluid aus der zumindest einen Öffnung (136) entlang des Fluidweges (120) zu einer oder mehreren der anderen Öffnungen gelenkt wird;
dadurch **gekennzeichnet,**
daß das Handventil (12) betreibbar ist, unter Druck gesetztes Fluid aus der Quelle (42) zu dem Auslaß (96) zu lenken, um einen Antrieb durch das Getriebe zu verhindern; daß die zumindest eine Öffnung (136) des Schiebeventils (14) über Fluid mit dem Fluidwegauswahlmittel (40) und mit zumindest einer (46, 50) der verbleibenden Reibvorrichtungen verbunden werden kann; und daß die andere/anderen Öffnung oder Öffnungen (138-142) über Fluid mit manchen (48-52) der verbleibenden Reibvorrichtungen verbunden werden kann/können.

2. Hydraulischer Steuerkreis nach Anspruch 1, worin das Fluidwegauswahlmittel ein Kugelventil (40) mit zwei Fluideinlässen (216, 218) und einem Fluidauslaß (220), wobei der Fluidauslaß über Fluid mit der einen Reibvorrichtung (54) verbunden werden kann, und eine Kugel (214) umfaßt, die zwischen den zwei Fluideinlässen bewegbar und in der Lage ist, den einen oder den anderen der Fluideinlässe zu schließen.

3. Hydraulischer Steuerkreis nach Anspruch 1 oder 2, der weiter ein Drucksteuerventil (28-38) umfaßt, das jeder Reibvorrichtung (46-56) zugeordnet ist, wobei jedes Drucksteuerventil einen Schieber (226) umfaßt, der in einer Bohrung (224) hin- und hergehend bewegbar ist, um den Fluiddruck zu modulieren, der an seine zugeordnete Reibvorrichtung angelegt wird.

4. Hydraulischer Steuerkreis nach einem der Ansprüche 1 bis 3, der weiter zumindest zwei Druckanlegeventile (22-26) umfaßt, die über Fluid mit den Öffnungen (136-142) in dem Schiebeventil (14) und miteinander verbunden sind, wobei jedes Druckanlegeventil einen Schieber (168) umfaßt, der in einer Bohrung (164) hin- und hergehend bewegbar ist, um zu erlauben oder zu verhindern, daß unter Druck gesetztes Fluid dort hindurchtritt.

5. Hydraulischer Steuerkreis nach einem der Ansprüche 1 bis 4, worin das Steuermittel zumindest zwei separate Fluidleitungen (130-134) zwischen dem Handventil (12) und dem Schiebeventil (14) umfaßt, wobei unter Druck gesetztes Fluid von dem Handventil zu einem Ende des Schiebers (114) in dem Schiebeventil gelenkt wird, um die hin- und hergehende Bewegung des Schiebers in dem Schiebeventil zu liefern, wobei der Schieber in dem Schiebeventil durch eine Feder (122) gegen die Wirkung des unter Druck gesetzten Fluids vorgespannt ist.

6. Hydraulisches Steuerventil nach Anspruch 5, worin das Steuermittel weiter ein solenoidbetätigtes Ventil (16-18), das in jeder separaten Fluidleitung (130-134) positioniert ist, und ein Steuermodul zum Steuern des Öffnens und Schließens des solenoidbetätigten Ventils umfaßt, wobei jedes Solenoidventil normal geschlossen ist, aber geöffnet werden kann, um seine zugeordnete Fluidleitung mit dem Auslaß zu verbinden.

## Revendications

1. Circuit de commande hydraulique destiné à une boîte de vitesses d'un véhicule, la boîte de vitesses comprenant au moins quatre dispositifs à friction (46 à 56) et pouvant fournir au moins trois rapports de vitesses en marche avant et un rapport de vitesses en marche arrière, le circuit de commande hydraulique comprenant une source (42) de pression hydraulique ; un moyen de sélection de trajet hydraulique (40) relié hydrauliquement à un premier des dispositifs à friction ; une vanne à commande manuelle (12) reliée hydrauliquement à la source (42) et au moyen de sélection de trajet hydraulique (40), et qui peut être reliée à un autre des dispositifs à friction ; une vanne de changement de vitesse (14) comprenant un boîtier (110) qui a un alésage (112) s'étendant dans une direction axiale, un tiroir (114) montée de façon à effectuer un mouvement de va et vient dans l'alésage, et un certain nombre d'orifices (136 à 142) qui sont écartés axialement l'un de l'autre et qui s'étendent radialement à travers le boîtier pour pénétrer dans l'alésage, au moins un des orifices (136) étant relié hydrauliquement à la vanne à commande manuelle (12), le tiroir (114) comprenant un trajet hydraulique (120) à sa surface extérieure qui s'étend dans la direction axiale ; et des moyens de commande (74 à 78 ; 16 à 18) permettant de commander le mouvement de va et vient du tiroir (114) dans la direction axiale ; dans lequel la vanne à commande manuelle (12) peut fonctionner de façon à amener du fluide pressurisé de la source (42) soit à la vanne de changement de vitesse (14) pour la marche avant de la boîte de vitesses, soit au moyen de sélection de trajet hydraulique (40) et audit autre dispositif à friction (56) pour la marche arrière de la boîte de vitesses ; et dans lequel les moyens de commande peuvent fonctionner de façon à déplacer le tiroir (114) à des positions prédéterminées par rapport aux orifices d'accès (136 à 142) qui dépendent du rapport de vitesses en marche avant demandé, de sorte que le fluide pressurisé est dirigé depuis ledit au moins un orifice (136), le long du trajet hydraulique (120), vers un ou plusieurs des autres orifices; caractérisé en ce que la vanne à commande manuelle (12) peut fonctionner de manière à diriger le fluide pressurisé depuis la source (42) vers l'évacuation (96) pour empêcher l'entraînement par la boîte de vitesses ; en ce que ledit au moins un orifice (136) de la vanne de changement de vitesse (14) peut être relié hydrauliquement au moyen de sélection de trajet hydraulique (40) et à au moins un (46, 50) des dispositifs à friction restants ; et en ce que l'autre ou les autres orifices (138 à 142) peuvent être reliés hydrauliquement à certains (48 à 52) des dispositifs à friction restants.

2. Circuit de commande hydraulique selon la revendication 1, dans lequel le moyen de sélection de trajet hydraulique comprend une vanne à bille (40) ayant deux entrées hydrauliques (216, 218) et une sortie hydraulique (220), la sortie hydraulique pouvant être reliée hydrauliquement audit un premier dispositif à friction (54), et une bille (214) qui peut se déplacer entre les deux entrées hydrauliques et qui peut fermer l'une ou l'autre des entrées hydrauliques.

3. Circuit de commande hydraulique selon la revendication 1 ou la revendication 2, comprenant en outre une vanne de commande de pression (28 à 38) associée à chaque dispositif à friction (46 à 56), chaque vanne de commande de pression comprenant un tiroir (226) qui peut effectuer un mouvement de va et vient dans un alésage (224) pour moduler la pression hydraulique appliquée au dispositif à friction qui lui est associé.

4. Circuit de commande hydraulique selon l'une quelconque des revendications 1 à 3, comprenant en outre au moins deux vannes d'application de pression (22 à 26) reliées hydrauliquement aux orifices (136 à 142) de la vanne de changement de vitesse (14) et reliées l'une à l'autre, chaque vanne d'application de pression comprenant un tiroir (168) qui peut effectuer un mouvement de va et vient dans un alésage (164) pour permettre ou empêcher le passage du fluide pressurisé.

5. Circuit de commande hydraulique selon l'une quelconque des revendications 1 à 4, dans lequel les moyens de commande comprennent au moins deux conduites hydrauliques séparées (130 à 134) entre la vanne à commande manuelle (12) et la vanne de changement de vitesse (14), le fluide pressurisé étant dirigé depuis la vanne à commande manuelle vers une extrémité du tiroir (114) de la vanne de changement de vitesse de façon à effectuer le mouvement de va et vient de la pièce d'espacement dans la vanne de changement de vitesse, la pièce d'espacement de la vanne de changement de vitesse étant chargée par un ressort (122) à l'encontre de l'action du fluide pressurisé.

6. Vanne de commande hydraulique selon la revendication 5, dans laquelle les moyens de commande comprennent en outre une électrovanne (16 à 18) positionnée dans chaque conduite hydraulique séparée (130 à 134), et un module de commande destiné à commander l'ouverture et la fermeture de l'électrovanne, chaque électrovanne étant normalement fermée, mais pouvant s'ouvrir pour relier à l'évacuation la conduite hydraulique à laquelle elle est associée.
